# EUROPÄISCHE PATENTSCHRIFT

(11) **EP 0 817 742 B1**
(45) Veröffentlichungstag und Bekanntmachung des Hinweises auf die Patenterteilung: **21.10.1998**
(21) Anmeldenummer: 96900875.4
(22) Anmeldetag: 25.01.1996
(51) Int. Cl.: B62H 3/08

(54) **EINRICHTUNG ZUM ABSTELLEN VON ZWEIRADFAHRZEUGEN**
DEVICE FOR PARKING TWO-WHEELED VEHICLES
DISPOSITIF POUR REMISER DES DEUX-ROUES

(30) Priorität: 26.01.1995 DE 19502394; 06.04.1995 DE 19512910
(43) Veröffentlichungstag der Anmeldung: 14.01.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: HOBERG, Elmar, D-44289 Dortmund (DE); STUDTRUCKER, Rainer, D-58300 Wetter (DE)
(86) Internationale Anmeldenummer: DE9600136
(87) Internationale Veröffentlichungsnummer: WO9622910

(56) Entgegenhaltungen:
- DE-A- 4 119 403
- DE-C- 70 850
- FR-A- 2 422 526

## Beschreibung

Die Erfindung betrifft eine Einrichtung zum Abstellen von Zweiradfahrzeugen, insbesondere Fahrrädern gemäß dem Oberbegriff des Hauptanspruches.

Es sind viele Einrichtungen bekannt, die zum Abstellen bzw. zur Einlagerung von Fahrrädern dienen. Aus der DE PS 70850 ist eine Vorrichtung der eingangs genannten Art zum Abstellen von Fahrrädern bekannt, bei der das Vorderrad in eine Rinne eingefahren und durch einen von oben angreifenden Bügel in dieser fixiert wird. Die Fixierung des Fahrrades bzw. des Fahrradrades erfolgt so, daß nach dem Einführen des Rades in die Rinne der Bügel gegen die Wirkung einer Feder manuell angehoben und auf das Rad aufgesetzt wird.

Daneben ist z.B. aus der DE-OS 26 52 992 eine Fahrradabstellanlage bekannt, bei der die beiden Räder des Fahrrads in eine Schiene eingefahren werden und der Rahmen des Fahrrads in einer an der Schiene angeordneten Klemmvorrichtung festgehalten wird. Die Lastaufnahme des Fahrrades erfolgt demnach am Fahrradrahmen. Das Vorder- und Hinterrad werden form- bzw. kraftschlüssig in der Schiene festgehalten.

Derartige Abstellvorrichtungen eignen sich bedingt zur Montage an verfahrbaren Paletten bzw. Plattformen.

Aufgabe der vorliegenden Erfindung ist es, eine Einrichtung zum Abstellen von Zweiradfahrzeugen anzugeben, die gebrauchsvorteilhaft und einfach bediendbar ist und die das Fahrzeug, insbesondere während des Transportes desselben in seiner Position zuverlässig sichert, ohne daß seine Bauteile geschädigt werden.

Diese Aufgabe ist durch die im Hauptanspruch angegebene Einrichtung gelöst. Die Unteransprüche stellen vorteilhafte Weiterbildungen dar.

Die Einrichtung, bei der ein Fahrzeugrad lediglich an zwei profilierten Stützpunkten der Radaufnahme so abgestützt ist, daß nur der Reifen in seinem bodenseitigen Bereich Berührungskontakt mit der Radaufnahme hat und dadurch sein seitlicher Bereich nicht beschädigt wird, sicht nun vor, daß das Rad durch die Krafteinleitung in seinen oberen Bereich über einen in der Radebene schwenkbaren Hebelarm in die Mulde gedrückt und dadurch vollständig fixiert wird. Am radseitigen Ende des Hebelarmes ist eine Andrückrolle angeordnet. Beim Einschieben des Rades in die Radaufnahme vollführt der federbelastete Hebelarm eine Schwenkbewegung nach oben, die gleichzeitig eine Ausweichbewegung bezüglich des Fahrzeugrades darstellt. Befindet sich das Fahrzeugrad in der Mulde der Radaufnahme, so schwenkt der Hebelarm durch die Federkraftbelastung nach unten und drückt das Rad in die Radaufnahme. Das Zweirad wird auf diese Art und Weise in der Einrichtung abgestellt und fixiert. Eine Handbedienung der Teile der Einrichtung ist nicht notwendig; lediglich das Einschieben des Fahrzeugs gegen die Federkraft des ausweichenden Hebelarmes bewirkt ein sicheres Abstellen und Fixieren, auch für den Transport. Die Kraftangriffspunkte liegen so, daß der Wirkbereich der auf das fixierte Rad einwirkenden Kräfte ein die Radnabe des Rades umschließendes Dreieck bildet. Vorteilhaft ist, wenn als Radaufnahme eine profilierte Schiene gewählt wird, die das Rad an zwei Stellen von unten, im Bereich der Reifen, stützt. Hierbei umschließen die Wirklinien der Stützkräfte die Radnabe, vorzugsweise des Vorderrades. Die Größe und die Form der Radaufnahme und die Lage der niederhaltenden Mittel, sind dem Raddurchmesser angepaßt. Bei der Anordnung der Einrichtung an beweglichen Unterlagen, z.B. einer Plattform oder einer Palette, ist es wichtig, daß die Stützpunkte das Fahrrad orthogonal zu seiner üblichen Fahrtrichtung fixieren.

Die profilierten Stützpunkte können durch eine V-förmige Schiene oder zwei getrennte profilierte Stützpunkte (z.B. zwei profilierte Rollen) gebildet werden. Dadurch wird zum einen ein sicherer Halt des Fahrrads erreicht und zum anderen eine Beschädigung, z.B. der Radfelge, vermieden, da die Stützpunkte nur den Radreifen berühren (umfassen).

Der Hebelarm kann frontseitig oder seitlich des Fahrzeugrades angeordnet sein. Die seitliche Hebelarmanordnung hat den Vorteil, daß die zur Ausweichbewegung aufzubringende Kraft gegenüber der frontseitigen Anordnung kleiner ist und daß das zu bedienende Raddurchmesser-Spektrum beim gleichzeitigem Erhalt des Kraftdreiecks zwischen den Auflagepunkten und der Andrückrolle größer ist.

Die das Rad aufnehmende Radaufnahme kann auch als eine durchgehende Schiene ausgebildet sein, was den Vorteil der sicheren Führung des Fahrrades zu der Radaufnahme und Hebelarm/Andrückrolle hat. Zusätzlich kann auch das andere Rad des Fahrzeugs in der Schiene aufgenommen werden.

Das Fahrrad wird bei der Übergabe in die Abstellage in der Gebrauchslage, d.h. auf seinen Rädern stehend, lediglich durch das Hineindrücken zwischen durch die Federkraft niedergehaltenen Hebelarm mit der Andrückrolle einerseits und die Radaufnahme andererseits fixiert. Der Benutzer braucht keine weiteren Handgriffe auszuführen, als das Fahrrad gegen den geringen Widerstand der Andrückrolle in die Aufnahme zu schieben.

Die erfindungsgemäße Einrichtung eignet sich insbesondere zum Transport von Fahrrädern auf einem Fördersystem. Sie kann auch mit einem Lager- oder Kommissioniersystem verknüpft werden. Ferner kann sie auch als eine Einspannvorrichtung für ein Fahrrad, insbesondere für das Vorderrad des Fahrrades in einem Eisenbahnwaggon oder als Fahrradständer vor Geschäften montiert werden.

Ein Ausführungsbeispiel der Erfindung ist in den nachfolgenden Figuren dargestellt. Es zeigen:
- Fig. 1: eine Seitenansicht der Einrichtung mit frontseitig angeordnetem Hebelarm der Andrückrolle mit einem Fahrrad
- Fig. 2: eine Darstellung der Fig. 1, jedoch mit seitlich angeordnetem Hebelarm
- Fig. 3: eine Vorderansicht der Einrichtung der Fig. 1
- Fig. 4: eine Vorderansicht der Einrichtung der Fig. 2
- Fig. 5: eine Draufsicht auf die Einrichtung der Fig. 1
- Fig. 6: eine Draufsicht auf die Einrichtung der Fig. 2

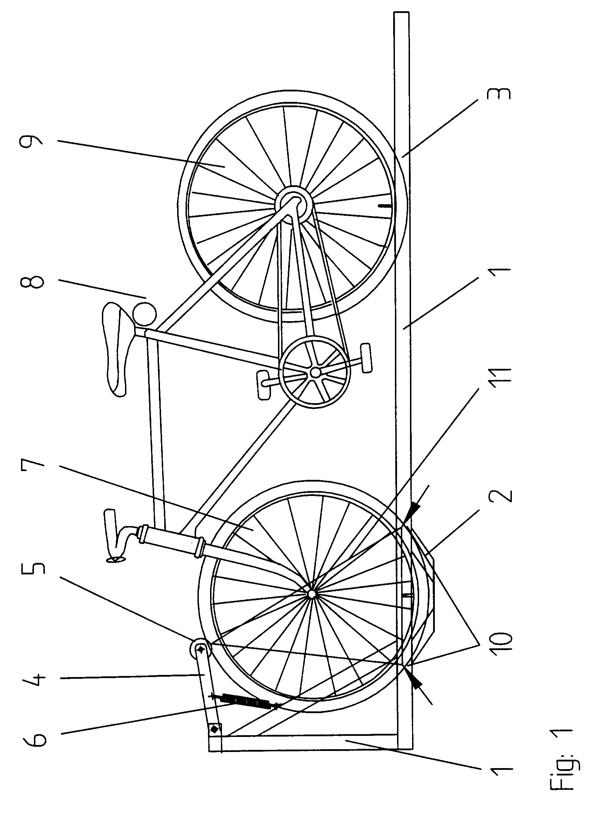

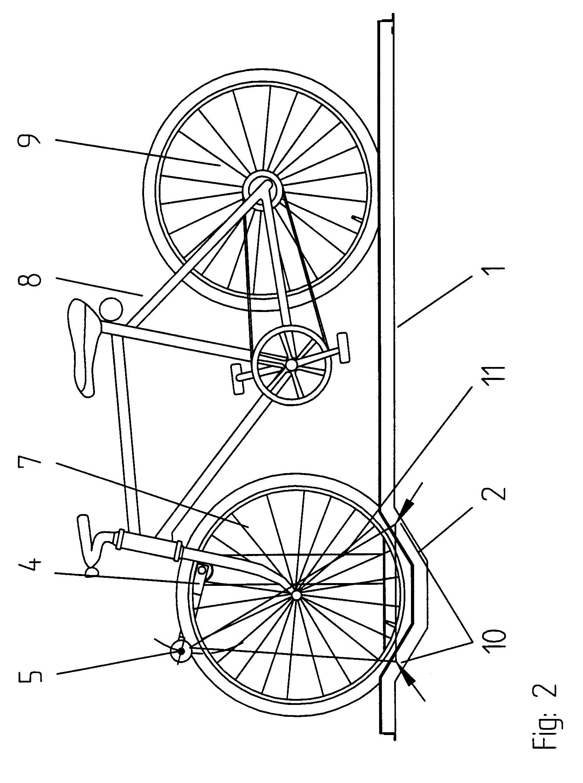

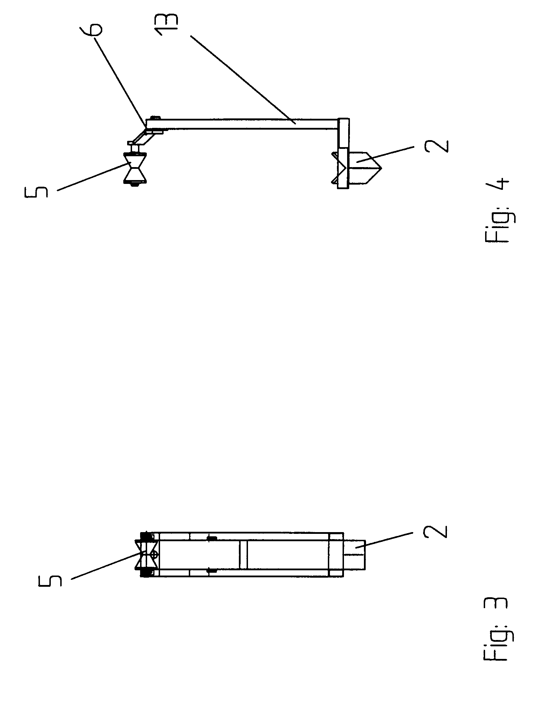

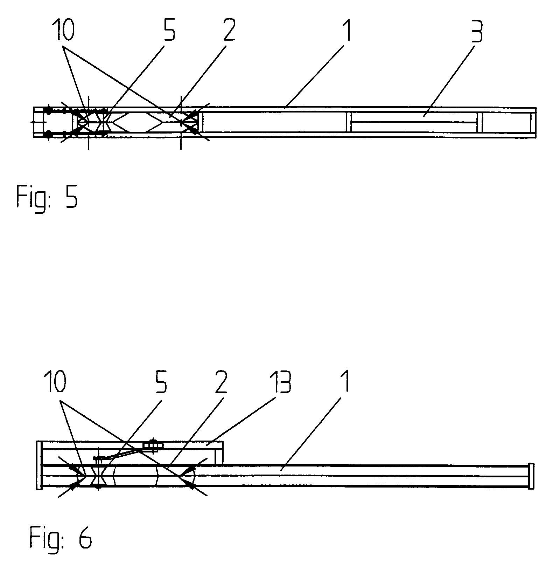

Die erfindungsgemäße Einrichtung weist einen Grundrahmen 1, der hier in seinem horizontalen Bereich durch eine V-förmige Schiene 3 gebildet ist, welche in dem Bereich, in dem ein Rad 7 des Fahrrades 8 fixiert werden soll, zu einer Aufnahme 2 geformt ist. Durch die V-förmige Profilierung der Schiene 3 im Bereich der Aufnahme 2 ist ein Fixieren des Rades 7 orthogonal zu der üblichen Fahrtrichtung des Fahrrades 8 erreicht. Ferner weist die Einrichtung einen Hebelarm 4 mit einer Andrückrolle 5 auf, durch die das Vorderrad 7 des Fahrrades 8 in der Aufnahme 2 an zwei Stützpunkten 10 derselben gehalten und fixiert wird. Die Andrückrolle 5, vorzugsweise in Form eines Diabolos, ist an einem in der Radebene schwenkbaren, federbelasteten Hebelarm 4 montiert. Der Hebelarm 4 ist am Grundrahmen 1 über ein Rahmenrohr 12 von der Frontseite des Rades 7 und ein Rahmenrohr 13 seitlich des Rades 7 befestigt und durch die Federkraft einer Feder 6 auf das Vorderrad 7 des Fahrrades 8 über die Andrückrolle 5 gedrückt. Die Andrückkraft der Rolle 5 wird durch Vorspannen der Feder 6 oder die Variation der Federkonstante eingestellt. Die Feder 6 kann eine Torsionsfeder (Fig. 2, 4, 6) oder als Druckfeder oder Zugfeder (Fig. 1, 3, 5) sein. Die Lage der Kraftangriffspunkte (zwei Stützpunkte 10 in der Aufnahme 2 und der Angriffspunkt der Rolle 5) ist so gewählt, daß das beim Verbinden dieser Punkte untereinander entstehende, den Wirkbereich der Kräfte aufzeigende Dreieck 11, die Radnabe des Vorderrades 7 umschließt, wodurch die durch den dynamischen Einsatzfall bedingten Biegemomente vom gesamten Fahrradrahmen aufgenommen werden. Knickmomente auf das Vorderrad werden so vollständig vermieden. Das Hinterrad 9 kann durch die V-förmige Schiene 3 ebenfalls bei Bedarf fixiert werden.

Es ergibt sich folgende Wirkungsweise:
Das Fahrrad 8 wird vom Benutzer in Gebrauchlage an die Einstelleinrichtung übergeben. Dabei muß der Benutzer nur das Vorderrad 7 gegen den Druck des federbelasteten Hebelarmes 4 bzw. der Andrückrolle 5 in die dafür vorgesehene Aufnahme 2 schieben. Bei diesem Vorgang wird der Hebelarm 4 zu einer in seiner Länge variablen, vom Raddurchmesser abhängigen, vertikalen Ausweichbewegung gezwungen. Um die Benutzung weiter zu vereinfachen, kann die bei dynamischem Einsatzfall einzuplanende Schiene für das Fixieren des Hinterrades 9 als Führungsschiene und somit als eine Art Zielvorrichtung bis direkt an die Aufnahme 2 verlängert werden. Der schwenkbar gelagerte Hebelarm 4 ist derart gestaltet, daß alle handelsüblichen Fahrräder in die Einstelleinrichtung geschoben werden können.

## Patentansprüche

1. Einrichtung zum Abstellen von Zweiradfahrzeugen, insbesondere Fahrrädern (8), mit einer Radaufnahme zum Einstellen eines Fahrzeugrades (7), wobei das Fahrzeugrad (7) in seinem unteren Bereich in der Radaufnahme (2) gestützt ist und mit federbelasteten Mitteln zur Einleitung einer Andrückkraft in den oberen Bereich des Rades (7) wobei das Fahrzeugrad (7) im unteren Bereich der Reifen nur an zwei profilierten Stützpunkten (10) in der Radaufnahme (2) gestützt ist, **dadurch gekennzeichnet**, daß die Mittel zur Krafteinleitung in den oberen Radbereich durch einen federbelasteten, in der Radebene schwenkbaren Hebelarm (4) mit einer an seinem radseitigen Ende angeordneten, profilierten Andrückrolle (5) gebildet sind.

2. Einrichtung nach Anspruch 1 **dadurch gekennzeichnet**, daß die Radaufnahme (2) durch eine Schiene (3) gebildet ist.

3. Einrichtung nach Anspruch 2 **dadurch gekennzeichnet**, daß auch das zweite Rad (9) durch dieselbe Schiene (3) am der Radaufnahme (2) gegenüberliegenden Ende aufgenommen wird.

4. Einrichtung nach Anspruch 1, 2 oder 3 **dadurch gekennzeichnet**, daß die Radaufnahme (2) einen V-förmigen Querschnitt aufweist.

5. Einrichtung nach einem der Ansprüche 1 bis 4 **dadurch gekennzeichnet**, daß der Hebelarm (4) frontseitig oder seitlich des Rades (7) angeordnet ist.

## Claims

1. A device for parking two-wheeled vehicles, especially bicycles (8), with a wheel receptacle for insertion of a vehicle wheel (7), wherein the vehicle wheel (7) is supported in its lower region in the wheel receptacle (2) and with spring-loaded means for applying pressure in the upper region of the wheel (7), wherein the vehicle wheel (7) is supported in the lower region of the tyre only on two profiled support points (10) in the wheel receptacle (2), characterized in that the means for applying the pressure in the upper wheel region are formed by a spring-loaded lever arm (4) pivoting in the plane of the wheel, with a profiled pressure roller (5) disposed on its end adjacent the wheel.

2. A device according to claim 1, characterized in that the wheel receptacle (2) is formed by a rail (3).

3. A device according to claim 2, characterized in that the second wheel (9) is also received by the same rail (3) at the end opposite the wheel receptacle (2).

4. A device according to claim 1, 2 or 3, characterized in that the wheel receptacle (2) has a V-shaped cross-section.

5. A device according to any of claims 1 to 4, characterized in that the lever arm (4) is arranged at the front end of or at the side of the wheel (7).

## Revendications

1. Dispositif de remisage de véhicules à deux roues, en particulier des bicyclettes (8), équipé d'un réceptacle pour y placer une roue (7) du véhicule en appui par sa partie inférieure tandis que des moyens chargés élastiquement sont prévus pour exercer une force d'application sur la partie supérieure de la roue (7) qui par la partie inférieure du pneumatique qu'elle porte, est en appui sur seulement deux points d'appui (10) profilés du réceptacle de roue (2),
caractérisé en ce que
les moyens pour exercer des forces sur la partie supérieure de la roue sont constitués par un bras de levier (4) soumis à l'action d'un ressort basculant dans le plan de la roue et portant à son extrémité située vers la roue un galet de pression (5) profilé.

2. Dispositif selon la revendication 1,
caractérisé en ce que
le réceptacle de roue (2) est constitué par un rail (3).

3. Dispositif selon la revendication 2,
caractérisé en ce que
la deuxième roue (9) est également reçue par le rail (3) à l'extrémité de celui-ci opposée au réceptacle (2).

4. Dispositif selon une des revendications 1, 2 ou 3,
caractérisé en ce que
le réceptacle (2) présente une section en forme de V.

5. Dispositif selon une des revendications 1 à 4,
caractérisé en ce que
le bras de levier (4) est monté devant, ou de côté, par rapport à la roue (7).
